(19) Europäisches Patentamt
European Patent Office
Office européen des brevets

(11) **EP 3 259 624 B1**

(12) **FASCICULE DE BREVET EUROPEEN**

(45) Date de publication et mention de la délivrance du brevet:
**07.11.2018 Bulletin 2018/45**

(51) Int Cl.:
*G01V 7/00* (2006.01)     *G01P 15/08* (2006.01)
*G01C 19/58* (2006.01)     *H05H 3/02* (2006.01)
*G21K 1/00* (2006.01)

(21) Numéro de dépôt: **16707190.1**

(22) Date de dépôt: **10.02.2016**

(86) Numéro de dépôt international:
**PCT/FR2016/050298**

(87) Numéro de publication internationale:
**WO 2016/132046 (25.08.2016 Gazette 2016/34)**

(54) **MESURE PAR INTERFÉROMÉTRIE ATOMIQUE AVEC PLUSIEURS ESPÈCES D'ATOMES**

MESSUNG MITTELS ATOMINTERFEROMETRIE MIT MEHREREN ARTEN VON ATOMEN

MEASUREMENT BY MEANS OF ATOMIC INTERFEROMETRY WITH MULTIPLE SPECIES OF ATOMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.02.2015 FR 1551271**

(43) Date de publication de la demande:
**27.12.2017 Bulletin 2017/52**

(73) Titulaire: **ONERA (Office National d'Etudes et de Recherches Aérospatiales)**
**91120 Palaiseau (FR)**

(72) Inventeurs:
• **ZAHZAM, Nassim**
**91761 Palaiseau (FR)**
• **BIDEL, Yannick**
**91761 Palaiseau (FR)**
• **BRESSON, Alexandre**
**91761 Palaiseau (FR)**
• **BONNIN, Alexis**
**91761 Palaiseau (FR)**

(74) Mandataire: **Cabinet Plasseraud**
**66, rue de la Chaussée d'Antin**
**75440 Paris Cedex 09 (FR)**

(56) Documents cités:
• D. SCHLIPPERT ET AL: "Quantum Test of the Universality of Free Fall", PHYSICAL REVIEW LETTERS, vol. 112, no. 20, 22 mai 2014 (2014-05-22), pages 203002-1, XP055235791, US ISSN: 0031-9007, DOI: 10.1103/PhysRevLett.112.203002
• KUHN C C N ET AL: "A Bose-condensed, simultaneous dual-species Mach-Zehnder atom interferom", NEW JOURNAL OF PHYSICS, INSTITUTE OF PHYSICS PUBLISHING, BRISTOL, GB, vol. 16, no. 7, 24 juillet 2014 (2014-07-24), page 73035, XP020267057, ISSN: 1367-2630, DOI: 10.1088/1367-2630/16/7/073035 [extrait le 2014-07-24]
• A. BONNIN ET AL: "Simultaneous dual-species matter-wave accelerometer", PHYSICAL REVIEW A (ATOMIC, MOLECULAR, AND OPTICAL PHYSICS), vol. 88, no. 4, 11 octobre 2013 (2013-10-11), pages 43615-1, XP055230224, USA ISSN: 1050-2947, DOI: 10.1103/PhysRevA.88.043615 cité dans la demande
• C Schubert ET AL: "Differential atom interferometry with 87^Rb and 85^Rb for testing the UFF in STE-QUEST", arXiv.org : arXiv:1312.5963 [physics.atom-ph], 20 décembre 2013 (2013-12-20), pages 1-21, XP055235934, Extrait de l'Internet: URL:http://arxiv.org/pdf/1312.5963v1.pdf [extrait le 2015-12-14]

**Description**

La présente invention concerne un procédé de mesure par interférométrie atomique, ainsi qu'un appareil pour mettre en oeuvre ce procédé.

Il est connu de mesurer une grandeur inertielle par interférométrie atomique. La grandeur inertielle peut être une coordonnée de champ gravitationnel ou une coordonnée d'une accélération qui est subie par des atomes utilisés pour la mesure.

Pour réaliser une telle mesure, un ensemble d'atomes est refroidi jusqu'à une température de quelques microkelvins, puis subit une séquence d'interactions avec des photons pour former une interférence atomique. Une mesure est alors effectuée, d'un déphasage qui est apparu lors de la formation de l'interférence atomique dans la fonction d'onde atomique («matter-wave» en anglais) résultante pour l'ensemble d'atomes. De façon connue, lorsque l'ensemble d'atomes est soumis à une accélération pendant la formation de l'interférence, le déphasage est $\Delta\Phi_{tot} = \mathbf{k} \bullet \mathbf{a} \times T^2 + \Delta\Phi_{op}$, où $\mathbf{k}$ est le vecteur d'onde qui correspond à une impulsion («momentum» en anglais) reçue ou cédée par un des atomes lors de chaque interaction entre les atomes et les photons, $\mathbf{a}$ est le vecteur de l'accélération subie par les atomes, $\bullet$ désigne l'opération de produit scalaire entre les vecteurs $\mathbf{k}$ et $\mathbf{a}$, T est un temps de base qui sépare des impulsions («pulse» en anglais) laser successives dans la séquence d'interactions entre les atomes et les photons qui forme l'interférence, et $\Delta\Phi_{op}$ est un déphasage constant qui dépend de la façon de produire les conditions d'interférence. Plus précisément, le déphasage constant $\Delta\Phi_{op}$ dépend de conditions opératoires qui sont subies de façon reproductible et de paramètres opératoires qui sont contrôlés.

En fait, le résultat de la mesure, noté P, n'est pas directement le déphasage $\Delta\Phi_{tot}$, mais une valeur qui dépend de ce déphasage par l'intermédiaire d'une fonction périodique, selon la formule $P = P_0 \cdot [1 - C \times \cos(\Delta\Phi_{tot})]$, où $P_0$ et C sont deux nombres non nuls. A cause de la forme des variations de la fonction $P(\Delta\Phi_{tot})$, la valeur du déphasage $\Delta\Phi_{tot}$ ne peut être déduite avec une précision satisfaisante à partir de la valeur du résultat de mesure P que lorsque cette valeur du déphasage $\Delta\Phi_{tot}$ appartient à des intervalles limités et séparés. Entre ces intervalles, c'est-à-dire lorsque le déphasage $\Delta\Phi_{tot}$ est proche de l'une des valeurs n x $\Pi$, n étant un nombre entier, les valeurs de dérivée de la fonction $P(\Delta\Phi_{tot})$ sont faibles, en valeurs absolues, de sorte que la valeur du déphasage $\Delta\Phi_{tot}$ ne peut plus être déduite avec une précision satisfaisante. Or l'ensemble des valeurs du déphasage $\Delta\Phi_{tot}$ qui ne sont pas obtenues avec précision est suffisamment important pour réduire l'intérêt du procédé de mesure par interférométrie atomique.

L'article intitulé «Quantum Test of the Universality of Free Fall», de D. Schlippert et al., Phys. Rev. Lett. 112, 203002 (2014), décrit un procédé de mesure par interférométrie atomique réalisé par interférences atomiques avec deux ensembles d'atomes d'espèces différentes, à un même endroit et à un même instant. Plusieurs mesures sont effectuées pour différentes valeurs d'un paramètre interne, séparément pour chaque ensemble d'atome, à fin d'estimer une fonction reliant un déphasage total au paramètre interne et à un paramètre externe qui peut ainsi être estimé. Par ailleurs, il est connu notamment de l'article intitulé «Simultaneous Dual-Species Matter-Wave Accelerometer», de A. Bonnin, N. Zahzam, Y. Bidel et A. Bresson, Phys. Rev. A 88, 043615 (2013), de réaliser des interférences atomiques avec deux ensembles d'atomes d'espèces différentes, à un même endroit et à un même instant. Chaque ensemble d'atomes fournit alors un résultat de mesure indépendamment de l'autre ensemble d'atomes.

Enfin, l'article intitulé «Simultaneous measurement of gravity accélération and gravity gradient with an atom interferometer», de F. Sorrentino et al., Appl. Phys. Lett. 101, 114106 (2012), décrit un gradiomètre à interférences atomiques. Avec le type d'appareil de ce document, deux mesures sont effectuées simultanément en utilisant deux ensembles d'atomes d'une même espèce, mais qui sont situés à deux endroits de mesures distants l'un de l'autre.

A partir de cette situation, un but de la présente invention consiste à améliorer la précision avec laquelle une valeur d'accélération quelconque peut être mesurée en utilisant un appareil de mesure par interférométrie atomique.

Un but complémentaire de l'invention est d'obtenir une telle amélioration de précision sans accroître significativement la complexité, le poids, l'encombrement ni le prix de l'appareil de mesure par interférométrie atomique.

Pour cela, un premier aspect de l'invention propose un procédé de mesure par interférométrie atomique, dans lequel chaque session de mesures est exécutée avec au moins deux ensembles d'atomes qui sont soumis chacun à des conditions de formation d'une interférence atomique. Les atomes de chaque ensemble d'atomes sont d'une espèce qui est dédiée à cet ensemble d'atomes et qui est différente de l'espèce des atomes de chaque autre ensemble d'atomes.

Pour chaque session de mesures, les conditions de formation de l'interférence atomique sont produites pour chaque ensemble d'atomes dans tout un volume qui est associé à cet ensemble d'atomes et qui contient au moins un point commun avec le volume associé à chaque autre ensemble d'atomes. Autrement dit, les interférences atomiques sont produites à un même endroit pour tous les ensembles d'atomes, de sorte que les résultats des mesures qui sont obtenus pour les différents ensembles d'atomes sont tous relatifs à ce même endroit.

En outre, les conditions de formation de l'interférence atomique sont produites pour chaque ensemble d'atomes entre un instant de début et un instant de fin respectivement avant et après un instant intermédiaire qui est commun pour tous les ensembles d'atomes. Autrement dit, les interférences atomiques sont produites simultanément pour tous les ensembles d'atomes, de sorte que les résultats des mesures qui sont obtenus pour les différents ensembles d'atomes sont tous relatifs à l'instant intermédiaire.

Un résultat de mesure est alors obtenu à chaque session de mesures indépendamment pour chaque ensemble d'atomes, chaque résultat de mesure variant selon une première fonction d'un déphasage total qui est apparu pour l'ensemble d'atomes lors de la formation de l'interférence atomique. Ce déphasage total comprend lui-même une somme d'une seconde fonction d'un paramètre externe dont une valeur est recherchée et d'un déphasage constant qui est subi par l'ensemble d'atomes correspondant pendant la formation de l'interférence atomique correspondante. Dans ces conditions, le procédé de l'invention comprend les étapes suivantes :

/1/ lors d'une session de mesures, appliquer une valeur pour au moins un paramètre opératoire, appelé paramètre interne et permettant de contrôler une différence entre les déphasages constants qui sont subis respectivement par les deux ensembles d'atomes, la (les) valeur(s) appliquée(s) pour le (les) paramètre(s) interne(s) étant telle(s) qu'une différence entre les déphasages totaux qui sont subis respectivement par les deux ensembles d'atomes, soit comprise entre $\Pi/4$ et $3\Pi/4$, en valeur absolue et modulo $\Pi$ ;

/2/ pour chaque résultat de mesure qui est obtenu pour l'un des ensembles d'atomes à la session de mesures, déterminer une valeur de dérivée de ce résultat de mesure par rapport au paramètre externe, cette dérivée étant évaluée pour le résultat de mesure ;

/3/ sélectionner celui des ensembles d'atomes pour lequel la valeur de dérivée qui a été déterminée à l'étape /2/ est la plus grande en valeur absolue ; et

/4/ calculer la valeur du paramètre externe à partir de celui des résultats de mesures qui a été obtenu à l'étape /2/ pour l'ensemble d'atomes sélectionné à l'étape /3/.

Ainsi, selon l'invention, la multiplicité des ensembles d'atomes qui sont utilisés pour une même session de mesures fournit une redondance de résultats. Cette redondance est combinée avec un contrôle des conditions opératoires pour les mesures qui appartiennent à une même session. De cette façon, une mauvaise précision qui peut affecter le calcul de la valeur du paramètre externe à partir de l'un des résultats de mesure, obtenu pour l'un des ensembles d'atomes, peut être palliée par un autre résultat de mesure qui est obtenu à la même session pour un autre ensemble d'atomes. De façon générale, la présente invention met donc en oeuvre des mesures multiples qui sont réalisées simultanément et au même endroit, mais avec des conditions opératoires et une valeur d'au moins un paramètre interne qui sont différentes pour chaque mesure de façon qu'une des mesures fournisse toujours une valeur pour le paramètre externe avec une précision satisfaisante. La sélection selon l'invention de la valeur du paramètre interne peut être effectuée initialement lors de la conception de l'appareil de mesure par interférométrie atomique, ou être actualisée périodiquement, ou actualisée avant d'effectuer une nouvelle session de mesures.

Dans le cas où deux ensembles d'atomes aboutissent individuellement à une précision satisfaisante pour la valeur du paramètre externe, la précision globale peut aussi être améliorée par l'invention, par effet de mesures multiples.

Dans différentes mises en oeuvre de l'invention, le (les) paramètre(s) interne(s) qui est (sont) utilisé(s) pour ajuster la différence entre les déphasages totaux, peut (peuvent) comprendre :

- au moins une amplitude d'un saut de phase introduit entre deux impulsions de rayonnement laser qui sont utilisées pour former l'interférence atomique pour l'un des ensembles d'atomes ;

- au moins une vitesse de variation d'une fréquence d'un rayonnement laser qui est utilisé pour former l'interférence atomique pour l'un des ensembles d'atomes ;

- une intensité et un gradient d'un champ magnétique qui est appliqué aux ensembles d'atomes pendant la formation des interférences atomiques ; ou

- une combinaison de plusieurs des paramètres internes précédents.

Avantageusement, la (les) valeur(s) qui est (sont) appliquée(s) pour le (les) paramètre(s) interne(s) peut (peuvent) être telle(s) que la différence entre les déphasages totaux qui sont subis respectivement par les deux ensembles d'atomes, soit comprise entre $3\Pi/8$ et $5\Pi/8$, préférentiellement $7\Pi/16$ et $9\Pi/16$, en valeur absolue et modulo $\Pi$.

De façon encore plus avantageuse, cette différence entre les déphasages totaux peut être comprise entre $15\Pi/32$ et $17\Pi/32$, en valeur absolue et modulo $\Pi$. Dans ce cas, pour celui des ensembles d'atomes qui est sélectionné à l'étape /3/, la première fonction peut être remplacée par une fonction affine du déphasage total qui est apparu lors de la formation de l'interférence atomique pour l'ensemble d'atomes sélectionné, dans tout un intervalle de valeurs qui possède une longueur d'intervalle supérieure ou égale à $3\Pi/8$ et qui contient le déphasage total apparu lors de la formation de l'interférence atomique.

La première fonction peut avoir pour expression $P = P_0 \cdot [1 - C \times \cos(\Delta\Phi_{tot})]$ pour chaque ensemble d'atomes, où P désigne le résultat de mesure, $\Delta\Phi_{tot}$ est le déphasage total qui est apparu lors de la formation de l'interférence atomique pour cet ensemble d'atomes, et $P_0$ et C sont deux nombres non nuls.

Le déphasage total peut être directement la somme de la seconde fonction et du déphasage constant : $\Delta\Phi_{tot} = \Delta\Phi(a) + \Delta\Phi_{op}$, où a désigne le paramètre externe, $\Delta\Phi(a)$ est la seconde fonction de ce paramètre externe pour l'ensemble d'atomes considéré, et $\Delta\Phi_{op}$ est le déphasage constant pour le même ensemble d'atomes.

Pour chaque ensemble d'atomes, la seconde fonction peut être du type fonction affine. Dans ce cas, et si le champ magnétique est nul ou si son gradient est nul, un coefficient directeur de cette fonction affine peut être égal à $k \times T^2$, où T est un temps de base pour une séquence d'interactions entre les atomes et des photons, qui est mise en oeuvre pour former l'interférence atomique, et k est le module d'une impulsion reçue ou cédée par un des atomes lors de chaque interaction entre les atomes et les photons, divisé par $h/(2\Pi) = ℏ$ où h est la constante de Planck.

Lorsque le paramètre interne comprend une amplitude d'un saut de phase introduit entre deux impulsions de rayonnement laser qui sont utilisées pour former l'interférence atomique pour l'un des ensembles d'atomes, le déphasage constant qui est subi par cet ensemble d'atomes peut comprendre un terme proportionnel à l'amplitude du saut de phase.

Lorsque le paramètre interne comprend une vitesse de variation de fréquence d'un rayonnement laser qui est utilisé pour former l'interférence atomique pour l'un des ensembles d'atomes, le déphasage constant qui est subi par cet ensemble d'atomes peut comprendre le terme $-2\Pi \times \alpha \times T^2$, où T est encore le temps de base pour la séquence d'interactions entre les atomes et des photons, qui est mise en oeuvre pour former l'interférence atomique de l'ensemble d'atomes concerné, et $\alpha$ est la vitesse de variation de la fréquence du rayonnement laser.

Lorsque le paramètre interne comprend une intensité et un gradient d'un champ magnétique qui est appliqué aux ensembles d'atomes pendant la formation des interférences atomiques, le déphasage constant qui est subi par chaque ensemble d'atomes peut comprendre le terme $(A_{at}/M_{at}) \times B_0 \times B_1 \times ℏ \times k \times T^2$, où $B_0$ et $B_1$ sont respectivement l'intensité et le gradient du champ magnétique, T est encore le temps de base pour la séquence d'interactions entre les atomes et des photons, qui est mise en oeuvre pour former l'interférence atomique pour l'ensemble d'atomes, k est encore le module de l'impulsion reçue ou cédée par un des atomes lors de chaque interaction entre les atomes et les photons, divisé par $ℏ = h/(2\Pi)$ où h est la constante de Planck, et $A_{at}/M_{at}$ est un coefficient qui dépend de l'espèce des atomes.

Dans divers modes de mise en oeuvre de l'invention, deux des espèces d'atomes, qui sont dédiées à des ensembles différents d'atomes utilisés dans une même session de mesures, peuvent être les isotopes 85 et 87 du rubidium. Alternativement, ce peut être des isotopes respectifs du rubidium et du césium, ou encore du rubidium et du potassium.

De façon générale, le paramètre externe peut être une coordonnée d'un champ gravitationnel, ou une coordonnée d'une accélération subie par les atomes.

Un second aspect de l'invention propose un appareil de mesure par interférométrie atomique qui comprend :

- une source d'atomes, adaptée pour produire au moins deux ensembles d'atomes, avec les atomes de chaque ensemble d'atomes qui sont d'une espèce dédiée à cet ensemble d'atomes et différente de l'espèce des atomes de chaque autre ensemble d'atomes ;

- des moyens adaptés pour produire des conditions d'interférence atomique pour chaque ensemble d'atomes, de sorte que ces conditions soient produites pour chaque ensemble d'atomes dans tout un volume qui est associé à l'ensemble d'atomes et qui contient au moins un point commun avec le volume associé à chaque autre ensemble d'atomes, et soient produites entre un instant de début et un instant de fin respectivement avant et après un instant intermédiaire qui est commun pour tous les ensembles d'atomes, de façon à constituer une session de mesures ;

- un dispositif de détection, qui est agencé pour fournir des résultats de mesure respectivement et indépendamment pour tous les ensembles d'atomes de chaque session de mesures ; et

- une unité d'analyse, qui est adaptée pour calculer au moins une valeur d'un paramètre externe à partir de chaque résultat de mesure.

Selon l'invention, l'appareil est adapté pour mettre en oeuvre un procédé qui est conforme au premier aspect de l'invention tel que décrit précédemment, y compris ses variantes et ses perfectionnements.

Avantageusement, pour chaque session de mesures, les conditions d'interférences atomiques peuvent être produites pour tous les ensembles d'atomes en utilisant un ensemble laser unique, qui est commun à ces ensembles d'atomes.

Un tel appareil peut former notamment un accéléromètre, un gravimètre ou un gyromètre.

D'autres particularités et avantages de la présente invention apparaîtront dans la description ci-après d'exemples de réalisation non limitatifs, en référence aux dessins annexés, dans lesquels :

- la figure 1 est un schéma de principe d'un appareil de mesure par interférométrie atomique conforme à la présente invention ;

- la figure 2 illustre des étapes d'une session de mesures réalisée en utilisant un appareil conforme à la figure 1 ;

- la figure 3 illustre une séquence particulière d'interactions pour créer une interférence atomique, qui peut être utilisée pour mettre en oeuvre l'invention ;

- la figure 4a est un diagramme illustrant l'obtention d'une valeur pour un paramètre externe en utilisant un procédé conforme à l'invention ; et

- la figure 4b est une version simplifiée du diagramme de la figure 4a, proposée pour certaines mises en oeuvre de l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

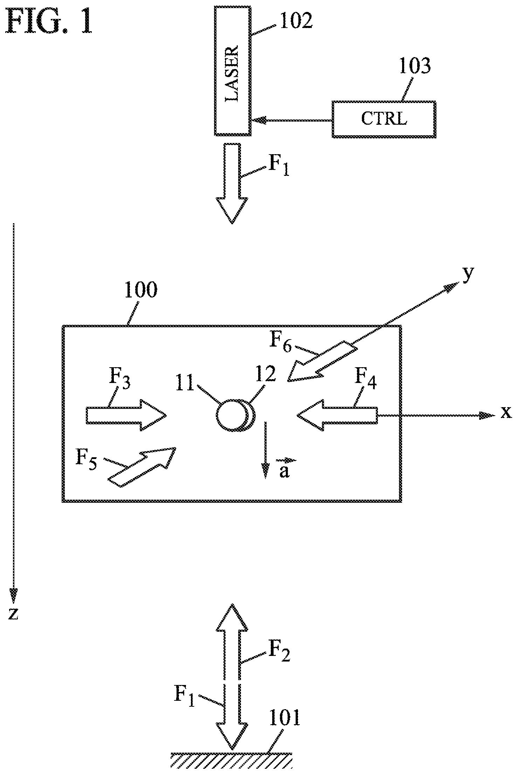

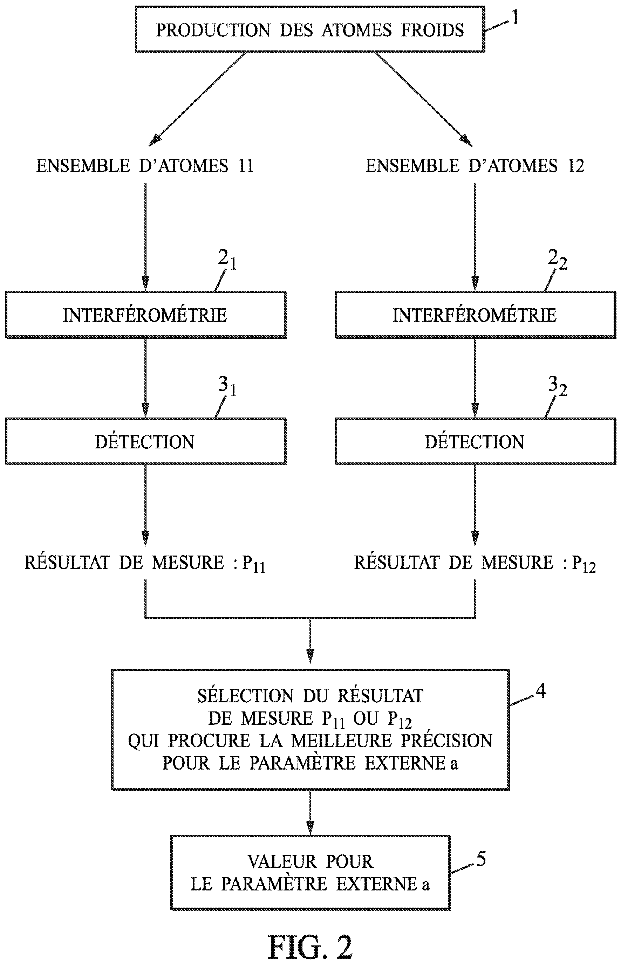

Comme illustré par les figures 1 et 2, un appareil conforme à l'invention comprend une source d'atomes 100 qui est utilisée pour produire deux ensembles d'atomes froids 11 et 12, correspondant à l'étape 1 de la figure 2. De façon préférée, les atomes de l'ensemble 11 peuvent être des atomes $^{85}$Rb, et ceux de l'ensemble 12 peuvent être des atomes $^{87}$Rb. La source 100 a pour fonction de piéger les atomes de chaque ensemble 11, 12 et de les refroidir jusqu'à une température déterminée. Elle peut avoir l'une des structures connues de l'Homme du métier, telle qu'un piège magnéto-optique. Un tel piège comprend une paire de bobines (non représentées) en configuration anti-Helmholtz, qui sont alimentées en courant électrique pendant une première phase de fonctionnement du piège pour créer un gradient de champ magnétique à l'endroit auquel chaque ensemble d'atomes est maintenu. Trois paires de faisceaux laser se croisent à cet endroit, en se propageant dans des sens opposés pour deux faisceaux d'une même paire. Ainsi, les faisceaux $F_1$ et $F_2$ se propagent en sens opposés selon l'axe z, les faisceaux $F_3$ et $F_4$ selon l'axe x et les faisceaux $F_5$ et $F_6$ selon l'axe y. Différentes méthodes de formation des faisceaux $F_1$-$F_6$, notamment en utilisant des miroirs de renvoi tel que le miroir 101 pour réduire le nombre de sources laser qui sont nécessaires, sont connues si bien qu'il n'est pas nécessaire de les répéter. Dans une seconde phase de fonctionnement du piège magnéto-optique, le gradient de champ magnétique est supprimé et les fréquences de rayonnement des faisceaux laser sont désaccordées pour obtenir les ensembles d'atomes froids 11 et 12, appelés mélasses.

En fait, la source 100 peut comprendre deux injecteurs d'atomes, respectivement de $^{85}$Rb et de $^{87}$Rb, et le piège magnéto-optique est contrôlé pour produire deux structures de piégeage enchevêtrées, qui sont respectivement destinées aux atomes $^{85}$Rb et aux atomes $^{87}$Rb. La source 100 est adaptée pour que les deux ensembles 11 et 12 soient disponibles en même temps et au même endroit, pour subir chacun une séquence d'interactions avec des photons indépendamment de l'autre ensemble d'atomes.

Les séquences d'interactions avec les photons sont alors produites simultanément pour les deux ensembles d'atomes 11 et 12, correspondant aux étapes $2_1$ et $2_2$, pour produire une interférence atomique pour chacun de ces ensembles indépendamment de l'autre ensemble. Chaque séquence peut comprendre une série d'impulsions laser pour provoquer des transitions stimulées entre deux états des atomes de l'ensemble 11 ou 12 auquel la séquence est dédiée. Plusieurs séquences d'impulsions peuvent être utilisées alternativement, dont celle qui est dite usuellement de Mach-Zehnder et décrite dans l'article intitulé «Atomic interferometry using stimulated Raman transitions», de M. Kasevitch et al., Phys. Rev. Lett. 67, pp. 181-184 (1991) et qui est rappelée maintenant :

- une première impulsion, dite impulsion $\Pi/2$ et ayant une fonction de séparatrice pour la fonction d'onde de l'ensemble d'atomes initial, afin de produire deux paquets d'onde atomique ;

- une seconde impulsion, dite $\Pi$ et ayant une fonction de miroir atomique pour chaque paquet d'onde atomique ; puis

- une troisième impulsion, de nouveau $\Pi/2$ et ayant une fonction de recombinaison des paquets d'onde atomique.

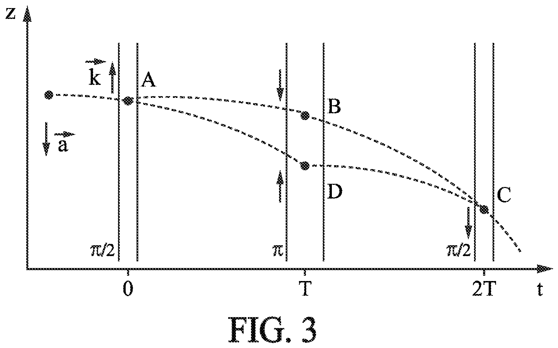

Cette séquence d'interactions est illustrée par la figure 3, dans laquelle t désigne le temps, et A, B, C et D désignent les interactions que subissent à chaque fois une partie de l'ensemble d'atomes concerné. k désigne alternativement les modules des vecteurs d'onde $k_{11}$ et $k_{12}$ qui sont définis juste après respectivement pour les ensembles d'atomes 11 ou 12, et de même pour T qui désigne alternativement les temps de base $T_{11}$ et $T_{12}$.

Chaque interaction d'une des impulsions laser avec un atome de l'un des ensembles 11/12 est en général du type multi-photonique, et met en oeuvre les deux faisceaux laser $F_1$ et $F_2$ qui se propagent en sens inverses parallèlement à une direction commune (voir figure 1). Le module de vecteur d'onde $k_{11/12}$ correspond alors à l'impulsion («momentum» en anglais) totale $p_{tot}$ qui est transférée à l'atome - c'est-à-dire reçue ou cédé par l'atome - lors d'une telle interaction multi-photonique : $k_{11/12} = 2\Pi p_{tot}/h = N_{11/12} \times k_{laser} = N_{11/12} \times 2\Pi/\lambda_{laser}$, où h est la constante de Planck, $k_{laser}$ et $\lambda_{laser}$ sont respectivement le module du vecteur d'onde et la longueur d'onde du rayonnement laser qui constitue les faisceaux $F_1$ et $F_2$ ($k_{laser} = 2\Pi/\lambda_{laser}$), et $N_{11}$ et $N_{12}$ désignent les nombres de photons qui interviennent dans chaque interaction multi-photonique, respectivement pour un atome de l'ensemble 11 ou pour un atome de l'ensemble 12. Les deux nombres $N_{11}$ et $N_{12}$ peuvent être sélectionnés indépendamment l'un de l'autre, par les conditions de formation de l'interférence atomique pour l'ensemble d'atomes concerné. Ainsi, ces conditions déterminent les types des interactions multi-photoniques qui sont provoquées et le nombre $N_{11/12}$ des photons qui sont impliqués dans chaque interaction. Par exemple, chaque interaction multi-photonique peut être une diffraction des atomes par des réseaux optiques qui sont formés avec les faisceaux $F_1$ et $F_2$, en régime de Bragg ou bien en régime d'oscillations de Bloch avec transitions atomiques sans changement d'état interne pour les atomes. L'article intitulé «102 $\hbar$ k Large Area Atom Interferometers» de S-w. Chio, T. Kovachy, H-C. Chien et M.A. Kasevitch, Phys. Rev. Lett. **107**, 130403 (2011), décrit de mettre en oeuvre des interactions de Bragg multi-photoniques en produisant chaque impulsion («pulse» en anglais) de rayonnement de la séquence qui forme l'interférence atomique, sous forme d'une série de sous-impulsions élémentaires. Alternativement, chaque interaction multi-photonique peut être une transition Raman, ou une double diffraction par un réseau optique, c'est-à-dire des transitions atomiques qui sont accompagnées de changements de l'état interne de l'atome.

$T_{11/12}$ est le temps de base qui sépare des impulsions («pulse» en anglais) laser successives dans la séquence d'interactions entre les atomes de l'ensemble 11/12 et les photons. Dans la séquence d'impulsions de Mach-Zehnder décrite plus haut, $T_{11/12}$ est la durée qui sépare la première impulsion à fonction de séparatrice de la deuxième impulsion à fonction de miroir, et qui sépare aussi cette deuxième impulsion de la troisième impulsion à fonction de recombinaison. $T_{11}$ concerne ainsi la séquence d'impulsions qui est utilisée pour former l'interférence atomique de l'ensemble d'atomes 11, et $T_{12}$ concerne la séquence d'impulsions qui est utilisée pour former l'interférence atomique de l'ensemble d'atomes 12. Par exemple, les temps de base $T_{11}$ et $T_{12}$ peuvent être compris entre 50 ms (milliseconde) et 150 ms.

De façon générale, les deux séquences d'interactions, les types des interactions entre les atomes et le rayonnement laser et les temps de base qui sont utilisés séparément les deux ensembles d'atomes, peuvent être identiques ou différents.

En particulier, la configuration d'appareil qui est décrite dans l'article «A cold atom pyramidal gravimeter with a single laser beam», de Q. Bodart et al., Appl. Phys. Lett. 96, 134101 (2010), peut être reprise. Le piège magnéto-optique et les moyens de production des conditions d'interférence atomique sont réalisés en utilisant un ensemble unique de source laser, comprenant la source laser 102 et l'unité de commande 103. Une telle configuration d'appareil est simple, économique et très compacte. En outre, le même ensemble de source laser peut être utilisé pour les deux ensembles d'atomes 11 et 12, comme décrit dans l'article intitulé «Simultaneous Dual-Species Matter-Wave Accelerometer», de A. Bonnin, N. Zahzam, Y. Bidel et A. Bresson, Phys. Rev. A 88, 043615 (2013), si bien qu'il possède les quatre fonctions suivantes :

- le piégeage et le refroidissement des atomes de l'ensemble 11 ;

- le piégeage et le refroidissement des atomes de l'ensemble 12 ;

- la production des impulsions pour créer les interférences d'onde atomique pour l'ensemble d'atomes 11 ; et

- la production des impulsions pour créer les interférences d'onde atomique pour l'ensemble d'atomes 12.

Chaque mesure interférométrique procède ensuite par détection de la proportion des atomes de l'ensemble correspondant qui se trouvent dans un état déterminé, par exemple l'un de deux états hyperfins fondamentaux. Plusieurs techniques différentes sont connues de l'Homme du métier pour réaliser une telle détection. Par exemple, ce peut être une mesure d'absorption lumineuse, avec des impulsions d'un rayonnement dont la longueur d'onde est sélectionnée pour provoquer une absorption à partir d'un seul des états atomiques hyperfins. De telles détections sont réalisées indépendamment pour les deux ensembles d'atomes 11 et 12, conformément aux étapes $3_1$ et $3_2$ de la figure 2. Des dispositifs de détection qui sont appropriés sont aussi supposés connus, et n'ont pas été représentés sur la figure 1 pour raison de clarté.

Un premier résultat de mesure, noté $P_{11}$, est ainsi obtenu pour l'ensemble d'atomes 11, et un second résultat de mesure, noté $P_{12}$, est aussi obtenu pour l'ensemble d'atomes 12. L'ensemble des étapes formé par la production des deux ensembles d'atomes 11 et 12 (étape 1), la production des séquences simultanées d'interactions avec des photons, respectivement pour les deux ensembles d'atomes (étapes $2_1$ et $2_2$), et les deux détections des proportions d'atomes qui se trouvent finalement dans un état déterminé pour obtenir les résultats de mesures $P_{11}$ et $P_{12}$ (étapes $3_1$ et $3_2$), constituent une session de mesures. Une telle session est caractérisée par la simultanéité des séquences d'interactions qui produisent les interférences atomiques, et la co-localisation des ensembles d'atomes pendant ces séquences, alors que les atomes des deux ensembles sont d'espèces différentes.

Dans ces conditions, le résultat de mesure $P_{11}$ est relié à la composante a selon l'axe z de l'accélération **a** qui est subie par les atomes de l'ensemble 11, par les deux relations suivantes :

$$P_{11} = P_0 \cdot [1 - C \times \cos(\Delta\Phi_{tot}|_{11})]$$

$$\Delta\Phi_{tot}|_{11} = \Delta\Phi_{11}(a) + \Delta\Phi_{op}|_{11}$$

où $P_0$ et C sont deux nombres non nuls connus ;

$\Delta\Phi_{tot}|_{11}$ est le déphasage total subi par les atomes de l'ensemble 11 pendant la formation de l'interférence atomique qui leur est destinée ;

$\Delta\Phi_{11}(a)$ est la partie du déphasage total $\Delta\Phi_{tot}|_{11}$ qui est provoquée par la composante d'accélération a. En particulier, lorsque le champ magnétique est nul ou uniforme pendant la formation de l'interférence atomique pour l'ensemble d'atomes 11 : $\Delta\Phi_{11}(a) = k_{11} \times T_{11}^2 \times a$ ; et

$\Delta\Phi_{op}|_{11}$ est le déphasage constant qui dépend de la façon de produire les conditions d'interférence pour l'ensemble d'atomes 11. Le déphasage constant $\Delta\Phi_{op}|_{11}$ dépend de conditions opératoires qui sont subies de façon reproductible, et de paramètres internes à l'appareil d'interférométrie atomique qui sont contrôlés pour chaque mesure effectuée avec l'ensemble d'atomes 11.

De la même façon, pour les atomes de l'ensemble 12, le résultat de mesure $P_{12}$ est relié à la même valeur de la composante a selon l'axe z de l'accélération **a** par les deux autres relations suivantes :

$$P_{12} = P_0' \cdot [1 - C' \times \cos(\Delta\Phi_{tot}|_{12})]$$

$$\Delta\Phi_{tot}|_{12} = \Delta\Phi_{12}(a) + \Delta\Phi_{op}|_{12}$$

où $P_0'$ et C' sont deux nombres non nuls connus, pouvant être différents de $P_0$ et C ou non ;

$\Delta\Phi_{tot}|_{12}$ est le déphasage total subi par les atomes de l'ensemble 12 pendant la formation de l'interférence atomique qui leur est destinée,

$\Delta\Phi_{12}(a)$ est la partie du déphasage total $\Delta\Phi_{tot}|_{12}$ qui est provoquée par la composante d'accélération a. En particulier encore, lorsque le champ magnétique est nul ou uniforme pendant la formation de l'interférence atomique pour l'ensemble d'atomes 12 : $\Delta\Phi_{12}(a) = k_{12} \times T_{12}^2 \times a$ ; et

$\Delta\Phi_{op}|_{12}$ est le déphasage constant qui dépend de la façon de produire les conditions d'interférence pour l'ensemble d'atomes 12. Il dépend aussi des conditions opératoires qui sont subies de façon reproductible, et de paramètres internes qui sont contrôlés pour chaque mesure effectuée avec l'ensemble d'atomes 12.

En liaison avec le vocable qui a été utilisé dans la partie générale de la présente description :

$P_{11}$ en tant que fonction de $\Delta\Phi_{tot}|_{11}$, a été appelé première fonction, effective pour l'ensemble d'atomes 11 ;

$\Delta\Phi_{11}$ en tant que fonction de a, a été appelé seconde fonction, effective pour l'ensemble d'atomes 11 ;

$P_{12}$ en tant que fonction de $\Delta\Phi_{tot}|_{12}$, a été aussi appelé première fonction, mais effective pour l'ensemble d'atomes 12 ;

$\Delta\Phi_{12}$ en tant que fonction de a, a été aussi appelé seconde fonction, mais effective pour l'ensemble d'atomes 12 ; et

a est le paramètre externe dont la valeur est recherchée.

Le paramètre externe a qui est mesuré peut être une composante d'une accélération, par exemple due à un mouvement en translation ou en rotation d'un engin porteur de l'appareil de mesure par interférométrie atomique, ou peut être une composante d'un champ gravitationnel dans lequel se trouve l'appareil.

Les premières fonctions $P_{11}(\Delta\Phi_{tot}|_{11})$ et $P_{12}(\Delta\Phi_{tot}|_{12})$ ne sont pas nécessairement identiques pour mettre en oeuvre l'invention, mais on les supposera identiques dans la suite de la présente description, pour raison de simplicité.

De même, les secondes fonctions $\Delta\Phi_{11}(a)$ et $\Delta\Phi_{12}(a)$ ne sont pas nécessairement identiques, notamment lorsque les types d'interactions des atomes avec les rayonnements laser, et/ou les séquences d'interactions sont différentes pour les deux ensembles d'atomes 11 et 12, et/ou qu'un gradient de champ magnétique est appliqué aux ensembles d'atomes 11 et 12 pendant la formation des interférences atomiques.

Selon l'invention, les conditions de formation des interférences atomiques pour les ensembles d'atomes 11 et 12 sont sélectionnées pour que la différence entre les déphasages totaux $\Delta\Phi_{tot}|_{11}$ et $\Delta\Phi_{tot}|_{12}$ soit de l'ordre de $\Pi/2$ en valeur absolue et modulo $\Pi$, par exemple égale à $\Pi/2$. Une telle relation de quadrature assure que les deux cosinus des fonctions $P_{11}(\Delta\Phi_{tot}|_{11})$ et $P_{12}(\Delta\Phi_{tot}|_{12})$ ne soient pas simultanément égaux à +1 ou -1, si bien que l'un des deux ensembles d'atomes 11 et 12, pour lequel la valeur du cosinus est suffisamment différente de +1 et -1, permet de déterminer la composante d'accélération a avec une précision qui est satisfaisante. Toutefois, celui des ensembles d'atomes 11 ou 12 qui fournit la valeur de la composante d'accélération a avec la meilleure précision peut changer en fonction de la valeur de a qui est finalement obtenue. Mais l'invention assure que l'un ou l'autre des deux ensembles d'atomes procure la valeur de a avec une précision satisfaisante.

Par ailleurs, la différence entre les déphasages totaux $\Delta\Phi_{tot}|_{11}$ et $\Delta\Phi_{tot}|_{12}$ peut n'être ajustée à la valeur $\Pi/2$ ou près de cette valeur, en valeur absolue et modulo $\Pi$, que dans un intervalle restreint autour de la valeur réelle de la composante d'accélération a. En effet, comme indiqué plus haut, les deux termes $\Delta\Phi_{11}(a)$ et $\Delta\Phi_{12}(a)$ des déphasages totaux $\Delta\Phi_{tot}|_{11}$ et $\Delta\Phi_{tot}|_{12}$ peuvent être différents, si bien qu'une relation de quadrature qui existe pour une valeur de la composante d'accélération a n'existe plus pour une autre valeur possible de la composante d'accélération a. La relation de quadrature, exacte ou dans une mesure approchée, est donc nécessaire pour la valeur de la composante d'accélération a qui est finalement déduite de chaque session de mesures.

Une première mise en oeuvre de l'invention utilise au moins un saut de phase entre deux impulsions de rayonnement laser de la séquence qui est utilisée pour l'ensemble d'atomes 11. On peut supposer à titre d'exemple que cette séquence est du type Mach-Zehnder qui a été décrit plus haut, et on compare les phases respectives des rayonnements laser des impulsions lorsqu'elles sont ramenées à un même instant et un même point de l'espace. L'écart qui apparaît dans ces conditions entre les phases des rayonnements laser de deux impulsions de la séquence est appelée saut de phase. De façon connue, un tel saut de phase peut être facilement ajusté à une valeur quelconque, entre 0 et $2\Pi$, la valeur 0 étant possible, en utilisant des sources micro-ondes, en particulier pour des rayonnements laser de sources Raman. Alors le déphasage constant $\Delta\Phi_{op}|_{11}$ qui est présent dans la fonction d'onde des atomes de l'ensemble 11 à l'issue de l'interférence atomique est : $\Delta\Phi_{op}|_{11} = \Phi_1 - 2 \times \Phi_2 + \Phi_3$, où $\Phi_1$, $\Phi_2$ et $\Phi_3$ désignent les phases respectives des rayonnements laser des trois impulsions successives de la séquence de Mach-Zehnder, lorsque ces phases sont ramenées au même instant et au même point. Par exemple, lorsqu'un saut de phase d'amplitude $\delta\Phi$ est introduit entre la première impulsion à fonction de séparatrice et la seconde impulsion à fonction de miroir, et qu'aucun saut de phase n'est introduit entre cette seconde impulsion et la troisième impulsion à fonction de recombinaison, alors: $\Phi_2 = \Phi_3 = \Phi_1 + \delta\Phi$ et $\Delta\Phi_{op}|_{11} = -\delta\Phi + \Delta\Phi_{inv}|_{11}$, où $\Delta\Phi_{inv}|_{11}$ est un déphasage d'interférence atomique qui peut être présent involontairement, par exemple du fait de l'appareil utilisé. Par principe, le déphasage involontaire $\Delta\Phi_{inv}|_{11}$ est constant et reproductible pour des sessions de mesures successives. De façon générale pour une séquence de Mach-Zehnder : $\Delta\Phi_{op}|_{11} = \Delta\Phi_{2-3}|_{11} - \Delta\Phi_{1-2}|_{11}$, où $\Phi_{1-2}|_{11}$ est l'amplitude du saut de phase entre la première impulsion et la seconde pour l'ensemble d'atomes 11, et $\Phi_{2-3}|_{11}$ est l'amplitude du saut de phase entre la seconde impulsion et la troisième pour le même ensemble d'atomes. En contrôlant les amplitudes des sauts de phase pour les deux ensembles d'atomes 11 et 12 séparément, chacun de la façon qui vient d'être décrite pour l'ensemble d'atomes 11, alors la différence entre les déphasages totaux $\Delta\Phi_{tot}|_{11}$ et $\Delta\Phi_{tot}|_{12}$ peut être ajustée à $\Pi/2$ modulo $\Pi$, quelques soient les déphasages involontaires $\Delta\Phi_{inv}|_{11}$ et $\Delta\Phi_{inv}|_{12}$ qui peuvent exister respectivement pour les deux ensembles d'atomes 11 et 12.

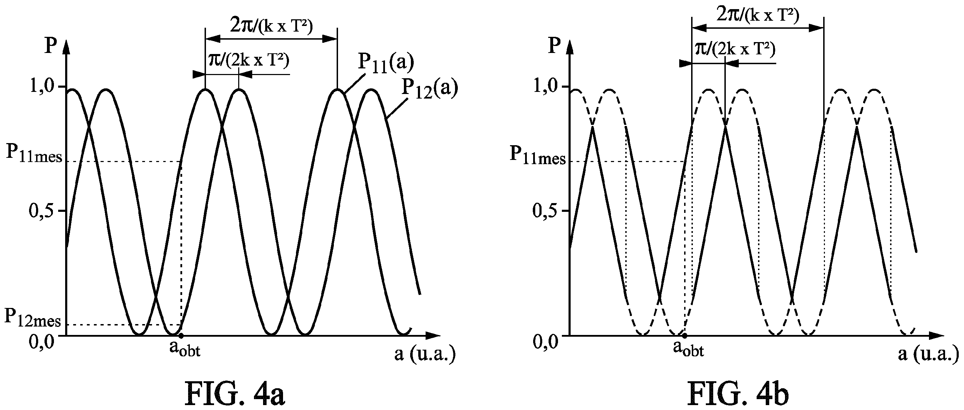

La figure 4a illustre une telle mise en oeuvre de l'invention. Pour les besoins d'illustration, les valeurs suivantes ont été adoptées pour les nombres constants : $P_0 = P_0' = 0{,}5$ et $C = C' = 1{,}0$. Dans le diagramme, l'axe horizontal repère les valeurs du paramètre externe a en unité arbitraire, et l'axe vertical, noté génériquement P, repère les valeurs des résultats de mesure $P_{11}$ et $P_{12}$. Les deux courbes notées $P_{11}(a)$ et $P_{12}(a)$ correspondent aux formules qui ont été données plus haut. Elles ont donc une période commune, égale à $2\Pi/(k \times T^2)$, et sont décalées entre elles de $\Pi/(2 \times k \times T^2)$, où k est le module du vecteur d'onde qui correspond à l'impulsion («momentum» en anglais) transférée à chaque interaction entre un atome et le rayonnement laser d'une impulsion («pulse» en anglais), et T le temps de base des séquences d'impulsions. Les valeurs de k et T sont supposées communes aux deux ensembles d'atomes 11 et 12, de sorte que la seconde fonction de la composante d'accélération a, ainsi commune aux deux ensembles d'atomes, est $\Delta\Phi_{11}(a) = \Delta\Phi_{12}(a) = k \times T^2 \times a$. Pour une valeur réelle de la composante d'accélération a, le diagramme montre les deux résultats de mesures qui sont obtenus à une même session de mesures : $P_{11mes}(a)$ pour l'ensemble d'atomes 11 et $P_{12mes}(a)$ pour l'ensemble d'atomes 12. La valeur du paramètre externe a qui est déduite de chaque session de mesures est donc la valeur commune d'abscisse dans le diagramme de la figure 4a, qui résout simultanément les deux équations $P_{11}(a) = P_{11mes}$ et $P_{12}(a) = P_{12mes}$. Dans l'exemple représenté, le résultat de mesure $P_{12mes}$ est situé à proximité d'un extremum (minimum ici) de la courbe $P_{12}(a)$. La dérivée de $P_{12}(a)$ par rapport à la composante d'accélération a, à cet endroit de la courbe est faible en valeur absolue, si bien que la déduction de la valeur de la composante d'accélération a à partir de ce résultat de mesure $P_{12mes}$ ne possède pas une bonne précision. Par contre, la dérivée de $P_{11}(a)$ par rapport à la composante d'accélération a, pour la même valeur de la composante d'accélération a, est supérieure à celle de $P_{12}(a)$, en valeurs absolues. Pour cette raison, la valeur de résultat de mesure $P_{11mes}$ permet de déduire la valeur de la composante d'accélération a avec une précision qui est meilleure que celle procurée par la valeur de résultat de mesure $P_{12mes}$. Cette analyse des résultats de mesures $P_{11mes}$ et $P_{12mes}$ pour parvenir à la valeur du paramètre externe a, correspond aux étapes 4 et 5 de la figure 2 et peut être exécutée par une unité d'analyse (non représentée) mettant en oeuvre un programme dédié. Sur la figure 4a, la valeur pour la composante d'accélération a qui est ainsi obtenue à partir de l'une des deux courbes $P_{11}(a)$ ou $P_{12}(a)$, ici $P_{11}(a)$ dans l'exemple représenté, est notée $a_{obt}$.

A partir de ces considérations, le diagramme de la figure 4b est déduit de celui de la figure 4a, en ne conservant pour chaque valeur réelle de la composante d'accélération a, que la portion de celle des deux courbes $P_{11}(a)$ et $P_{12}(a)$ qui procure la meilleure précision. La relation entre les résultats de mesures $P_{11}$ et $P_{12}$ d'une part, et la valeur de la composante d'accélération a d'autre part, est alors constituée de segments qui appartiennent alternativement à l'une ou l'autre des deux courbes $P_{11}(a)$ et $P_{12}(a)$, en changeant de courbe à chaque intersection entre celles-ci. En outre, les inventeurs ont trouvé que chaque segment de courbe ainsi identifié pouvait être remplacé par un segment rectiligne reliant les deux points d'intersection des courbes $P_{11}(a)$ et $P_{12}(a)$, qui définissent les extrémités du segment concerné. Chaque segment rectiligne a alors une longueur égale à $\Pi/(2 \times k \times T^2)$ en projection sur l'axe horizontal, correspondant à une longueur égale à $\Pi/2$ lorsqu'elle est exprimée par rapport aux déphasages totaux.

Une seconde mise en oeuvre de l'invention utilise au moins l'une des vitesses de variation de fréquence des rayonnements laser qui sont utilisés pour former les interférences atomiques pour les ensembles d'atomes 11 et 12. Si $\alpha_{11}$ et $\alpha_{12}$ désignent ces vitesses de variation de fréquence de rayonnement laser, respectivement pour les deux ensembles d'atomes 11 et 12, alors $\Delta\Phi_{op}|_{11} = -2\Pi \times \alpha_{11} \times T_{11}^2$ et $\Delta\Phi_{op}|_{12} = -2\Pi \times \alpha_{12} \times T_{12}^2$. Sous réserve des mêmes hypothèses d'identité des interactions entre atomes et rayonnement, d'identité des séquences d'impulsions entre les deux ensembles d'atomes 11 et 12, et d'identité des temps de base, les diagrammes des figures 4a et 4b s'appliquent aussi à cette deuxième mise en oeuvre de l'invention.

Une troisième mise en oeuvre de l'invention utilise un gradient de champ magnétique auquel les deux ensembles d'atomes 11 et 12 sont soumis pendant la formation des interférences atomiques respectives. Pour cela, une composante du champ magnétique B selon l'axe z peut varier linéairement en fonction de la coordonnée z (figure 1) de la façon suivante : $B(z) = B_0 + B_1 \times z$, où $B_0$ est l'intensité moyenne et $B_1$ est le gradient du champ magnétique. Avantageusement, le champ magnétique $B(z)$ peut être produit par les bobines en configuration anti-Helmholtz du piège magnéto-optique. Alors, la seconde fonction de la composante d'accélération a possède un terme supplémentaire, conformément à la relation suivante pour l'ensemble d'atomes 11 :

$$\Delta\Phi_{11}(a) = k_{11} \times T_{11}^2 \times a \ + \ 2A_{at}|_{11} \times B_0 \times B_1 \times T_{11}^3 \times a$$

où $A_{at}|_{11} = -2\mu_B^2/(\hbar^2 G_{at}|_{11})$, $\mu_B$ désignant le magnéton de Bohr, $G_{at}|_{11}$ désignant l'écart énergétique entre les deux états hyperfins de la transition Raman des atomes de l'ensemble 11, lorsqu'une telle interaction entre atomes et rayonnement est utilisée, et $\hbar$ étant égal à $h/(2\Pi)$ où h est la constante de Planck. Simultanément, le déphasage constant devient :

$$\Delta\Phi_{op}|_{11} = A_{at}|_{11} \times B_0 \times B_1 \times \hbar \times k_{11} \times T_{11}^2/M_{at}|_{11} \ + \ \Delta\Phi_{inv}|_{11}$$

où $M_{at}|_{11}$ désigne la masse de chaque atome de l'ensemble 11.

De façon similaire, la seconde fonction de la composante d'accélération a pour l'ensemble d'atomes 12, devient en présence du gradient de champ magnétique B :

$$\Delta\Phi_{12}(a) = k_{12} \times T_{12}^2 \times a \; + \; 2A_{at}|_{12} \times B_0 \times B_1 \times T_{12}^3 \times a$$

et pour le déphasage constant :

$$\Delta\Phi_{op}|_{12} = A_{at}|_{12} \times B_0 \times B_1 \times \hbar \times k_{12} \times T_{12}^2/M_{at}|_{12} \; + \; \Delta\Phi_{inv12}$$

où $A_{at}|_{12} = -2\mu_B^2/(\hbar^2 G_{at}|_{12})$, $G_{at}|_{12}$ $G_{at}|_{12}$ désignant l'écart énergétique entre les deux états hyperfins de la transition Raman des atomes de l'ensemble 12, et $M_{at}|_{12}$ désignant la masse de chaque atome de l'ensemble 12. Par exemple, lorsque les atomes de l'ensemble 11 sont l'isotope $^{85}$Rb: $A_{at}|_{11} = -2\Pi \times 1290 \times 10^8$ Hz/T$^2$ et $M_{at}|_{11} = 1,410.10^{-25}$ kg, et lorsque les atomes de l'ensemble 12 sont l'isotope $^{87}$Rb: $A_{at}|_{12} = -2\Pi \times 573 \times 10^8$ Hz/T$^2$ et $M_{at}|_{12} = 1,443.10^{-25}$ kg. Ainsi, il est possible de sélectionner des valeurs appropriées pour l'intensité $B_0$ et le gradient $B_1$ du champ magnétique, pour que la différence entre les déphasages totaux $\Delta\Phi_{tot}|_{11}$ et $\Delta\Phi_{tot}|_{12}$ soit encore égale à $\Pi/2$ modulo $\Pi$. En fonction de la méthode utilisée pour produire le champ magnétique, son intensité $B_0$ et son gradient $B_1$ peuvent être proportionnels l'un à l'autre. Toutefois, à cause de la différence de valeur entre les deux coefficients $A_{at}|_{11}$ et $A_{at}|_{12}$, les périodes des deux courbes $P_{11}(a)$ et $P_{12}(a)$ ne sont plus identiques même lorsque $k_{11} = k_{12}$ et $T_{11} = T_{12}$, de sorte que la relation de quadrature n'est ajustée par l'invention que localement, autour de la valeur $a_{obt}$ de la composante d'accélération a.

Il est entendu que l'invention peut être modifiée ou adaptée par rapport à la description détaillée qui vient d'en être donnée. En particulier, la séquence des impulsions qui forme chaque interférence atomique n'est pas nécessairement du type Mach-Zehnder, mais peut être remplacée par l'une des autres séquences connues de l'Homme du métier pour former une interférence atomique.

Les trois mises en oeuvre qui ont été décrites, en utilisant les sauts de phase entre impulsions successives du rayonnement laser, la vitesse de variation de la fréquence du rayonnement laser, et le champ magnétique, peuvent être combinées. Les contributions aux déphasages qui sont accumulés pendant la formation de chaque interférence atomique, s'ajoutent alors.

Enfin, le type de chaque interaction entre atomes et photons qui est provoquée dans chaque séquence, peut être varié dans la mesure où la combinaison des interactions de la séquence forme encore une interférence atomique, et où les vecteurs d'onde associés aux impulsions totales qui sont transférées aux atomes lors de ces interactions satisfont la présente invention.

**Revendications**

1. Procédé de mesure par interférométrie atomique, dans lequel chaque session de mesures est exécutée avec au moins deux ensembles d'atomes (11, 12) chacun soumis à des conditions de formation d'une interférence atomique, les atomes de chaque ensemble d'atomes (11, 12) étant d'une espèce dédiée audit ensemble d'atomes et différente de l'espèce des atomes de chaque autre ensemble d'atomes,

procédé dans lequel pour chaque session de mesures, lesdites conditions sont produites pour chaque ensemble d'atomes (11, 12) dans tout un volume qui est associé audit ensemble d'atomes et qui contient au moins un point commun avec le volume associé à chaque autre ensemble d'atomes, et sont produites entre un instant de début et un instant de fin respectivement avant et après un instant intermédiaire commun à tous les ensembles d'atomes, et dans lequel un résultat de mesure ($P_{11}$, $P_{12}$) est obtenu à chaque session de mesures indépendamment pour chaque ensemble d'atomes (11, 12), chaque résultat de mesure variant selon une première fonction d'un déphasage total apparu pour l'ensemble d'atomes correspondant lors de la formation de l'interférence atomique, ledit déphasage total comprenant une somme d'une seconde fonction d'un paramètre externe (a) dont une valeur est recherchée et d'un déphasage constant qui est subi par l'ensemble d'atomes correspondant pendant ladite formation de l'interférence atomique,

le procédé étant **caractérisé en ce qu'**il comprend les étapes suivantes :

/1/ lors d'une session de mesures, appliquer une valeur pour au moins un paramètre opératoire, appelé paramètre interne et permettant de contrôler une différence entre les déphasages constants qui sont subis respectivement par les deux ensembles d'atomes, la valeur appliquée pour ledit au moins un paramètre interne étant telle qu'une différence entre les déphasages totaux qui sont subis respectivement par les deux ensembles d'atomes (11, 12), soit comprise entre $\Pi/4$ et $3\Pi/4$, en valeur absolue et modulo $\Pi$ ;

/2/ pour chaque résultat de mesure ($P_{11}$, $P_{12}$) obtenu pour l'un des ensembles d'atomes (11, 12) à ladite session de mesures, déterminer une valeur de dérivée dudit résultat de mesure par rapport au paramètre externe (a), ladite dérivée étant évaluée pour ledit résultat de mesure ;

/3/ sélectionner celui des ensembles d'atomes (11, 12) pour lequel la valeur de dérivée déterminée à l'étape /2/ est la plus grande en valeur absolue ; et

/4/ calculer la valeur du paramètre externe (a) à partir du résultat de mesure ($P_{11}$, $P_{12}$) obtenu à l'étape /2/ pour l'ensemble d'atomes sélectionné à l'étape /3/.

2. Procédé selon la revendication 1, suivant lequel ledit au moins un paramètre interne comprend au moins une amplitude d'un saut de phase introduit entre deux impulsions de rayonnement laser qui sont utilisées pour former l'interférence atomique pour l'un des ensembles d'atomes (11, 12), au moins une vitesse de variation d'une fréquence d'un rayonnement laser qui est utilisé pour former l'interférence atomique pour l'un des ensembles d'atomes, ou une intensité et un gradient d'un champ magnétique qui est appliqué aux ensembles d'atomes pendant la formation des interférences atomiques, ou une combinaison de plusieurs parmi ladite au moins une amplitude de saut de phase, ladite au moins une vitesse de variation de fréquence de rayonnement laser et lesdits intensité et gradient de champ magnétique.

3. Procédé selon la revendication 1 ou 2, suivant lequel la valeur appliquée pour ledit au moins un paramètre interne est telle que la différence entre les déphasages totaux qui sont subis respectivement par les deux ensembles d'atomes (11, 12), soit comprise entre $15\Pi/32$ et $17\Pi/32$, en valeur absolue et modulo $\Pi$, et suivant lequel, pour celui des ensembles d'atomes (11, 12) qui est sélectionné à l'étape /3/, la première fonction est remplacée par une fonction affine du déphasage total apparu lors de la formation de l'interférence atomique pour l'ensemble d'atomes sélectionné, dans tout un intervalle de valeurs ayant une longueur d'intervalle supérieure ou égale à $3\Pi/8$, et qui contient ledit déphasage total apparu lors de la formation de l'interférence atomique.

4. Procédé selon l'une quelconque des revendications précédentes, suivant lequel la première fonction a pour expression $P = P_0 \cdot [1 - C \times \cos(\Delta\Phi_{tot})]$ pour chaque ensemble d'atomes (11, 12), où P désigne le résultat de mesure, $\Delta\Phi_{tot}$ est le déphasage total apparu lors de la formation de l'interférence atomique pour ledit ensemble d'atomes, et $P_0$ et C sont deux nombres non nuls.

5. Procédé selon l'une quelconque des revendications précédentes, suivant lequel ledit au moins un paramètre interne comprend une amplitude d'un saut de phase introduit entre deux impulsions de rayonnement laser qui sont utilisées pour former l'interférence atomique pour l'un des ensembles d'atomes (11, 12), et le déphasage constant qui est subi par ledit ensemble d'atomes comprend un terme proportionnel à l'amplitude du saut de phase.

6. Procédé selon l'une quelconque des revendications précédentes, suivant lequel ledit au moins un paramètre interne comprend une vitesse de variation de fréquence d'un rayonnement laser qui est utilisé pour former l'interférence atomique pour l'un des ensembles d'atomes (11, 12), et le déphasage constant qui est subi par ledit ensemble d'atomes comprend le terme $-2\Pi \times \alpha \times T^2$, où T est un temps de base pour une séquence d'interactions entre les atomes et des photons, qui est mise en oeuvre pour former l'interférence atomique dudit ensemble d'atomes, et $\alpha$ est la vitesse de variation de fréquence du rayonnement laser.

7. Procédé selon l'une quelconque des revendications précédentes, suivant lequel ledit au moins un paramètre interne comprend une intensité et un gradient d'un champ magnétique qui est appliqué aux ensembles d'atomes (11, 12) pendant la formation des interférences atomiques, et le déphasage constant qui est subi par chaque ensemble d'atomes comprend le terme $(A_{at}/M_{at}) \times B_0 \times B_1 \times \hbar \times k \times T^2$, où $B_0$ et $B_1$ sont respectivement l'intensité et le gradient du champ magnétique, T est un temps de base pour une séquence d'interactions entre les atomes et des photons, qui est mise en oeuvre pour former l'interférence atomique pour ledit l'ensemble d'atomes, k est un module d'une impulsion reçue ou cédée par un des atomes lors de chaque interaction entre les atomes et les photons, divisé par $\hbar = h/(2\Pi)$ où h est la constante de Planck, et $A_{at}/M_{at}$ est un coefficient qui dépend de l'espèce des atomes.

8. Appareil de mesure par interférométrie atomique comprenant :

- une source d'atomes (100) adaptée pour produire au moins deux ensembles d'atomes (11, 12), avec les atomes de chaque ensemble d'atomes qui sont d'une espèce dédiée audit ensemble d'atomes et différente de l'espèce des atomes de chaque autre ensemble d'atomes ;
- des moyens (101-103) adaptés pour produire des conditions d'interférence atomique pour chaque ensemble d'atomes (11, 12), de sorte que lesdites conditions soient produites pour chaque ensemble d'atomes dans tout un volume qui est associé audit ensemble d'atomes et qui contient au moins un point commun avec le volume associé à chaque autre ensemble d'atomes, et produites entre un instant de début et un instant de fin respectivement avant et après un instant intermédiaire qui est commun pour tous les ensembles d'atomes, de façon à constituer une session de mesures ;
- un dispositif de détection agencé pour fournir des résultats de mesure ($P_{11}$, $P_{12}$) respectivement et indépendamment pour tous les ensembles d'atomes (11, 12) de chaque session de mesures ; et
- une unité d'analyse adaptée pour calculer au moins une valeur d'un paramètre externe (a) à partir de chaque résultat de mesure ($P_{11}$, $P_{12}$),

dans lequel chaque résultat de mesure ($P_{11}$, $P_{12}$) varie selon une première fonction d'un déphasage total apparu pour l'ensemble d'atomes correspondant lors de la formation de l'interférence atomique, ledit déphasage total comprenant une somme d'une seconde fonction du paramètre externe (a) dont la valeur est recherchée et d'un déphasage constant qui est subi par l'ensemble d'atomes correspondant pendant ladite formation de l'interférence atomique,
l'appareil étant **caractérisé en ce qu'**il est adapté pour appliquer, lors de chaque session de mesures, une valeur pour au moins un paramètre opératoire, appelé paramètre interne et permettant de contrôler une différence entre les déphasages constants qui sont subis respectivement par les deux ensembles d'atomes (11, 12), de sorte qu'une différence entre les déphasages totaux qui sont subis respectivement par les deux ensembles d'atomes, soit comprise entre $\Pi/4$ et $3\Pi/4$, en valeur absolue et modulo $\Pi$ ;
et l'unité d'analyse étant adaptée pour exécuter les étapes /2/ à /4/ d'un procédé de mesure par interférométrie atomique conforme à l'une quelconque des revendications 1 à 8.

9. Appareil selon la revendication 8, dans lequel pour chaque session de mesures, les conditions d'interférences atomiques sont produites pour tous les ensembles d'atomes (11, 12) en utilisant un ensemble de source laser (102, 103) unique, commun auxdits ensembles d'atomes.

10. Appareil selon la revendication 8 ou 9, formant un accéléromètre, un gravimètre ou un gyromètre.

**Patentansprüche**

1. Verfahren zur Messung mittels Atominterferometrie, wobei jede Messreihe mit zumindest zwei Atomgruppen (11, 12), die jeweils Bedingungen zur Ausbildung einer Atominterferenz ausgesetzt werden, ausgeführt wird,
wobei die Atome jeder Atomgruppe (11, 12) von einer Art sind, die der Atomgruppe gewidmet ist und sich von der Art der Atome jeder anderen Atomgruppe unterscheidet,
wobei in dem Verfahren für jede Messreihe die Bedingungen für jede Atomgruppe (11, 12) in einem ganzen Volumen, das der Atomgruppe zugeordnet ist und zumindest einen gemeinsamen Punkt mit dem jeder anderen Atomgruppe zugeordneten Volumen beinhaltet, erzeugt werden und zwischen einem Startzeitpunkt und einem Endzeitpunkt vor bzw. nach einem Zwischenzeitpunkt, der allen Atomgruppen gemeinsam ist, erzeugt werden,
und wobei bei jeder Messreihe unabhängig für jede Atomgruppe (11, 12) ein Messergebnis ($P_{11}$, $P_{12}$) erhalten wird, wobei jedes Messergebnis in Abhängigkeit von einer ersten Funktion einer für die entsprechende Atomgruppe bei der Ausbildung der Atominterferenz aufgetretenen Gesamtphasenverschiebung variiert, wobei die Gesamtphasenverschiebung eine Summe einer zweiten Funktion eines externen Parameters (a), von dem ein Wert gesucht wird, und einer konstanten Phasenverschiebung, welche die entsprechende Atomgruppe während der Ausbildung der Atominterferenz erfährt, umfasst,
wobei das Verfahren **dadurch gekennzeichnet ist, dass** es die folgenden Schritte umfasst:

/1/während einer Messreihe, Anwenden eines Wertes für zumindest einen operativen Parameter, der als interner Parameter bezeichnet wird und es erlaubt, eine Differenz zwischen den konstanten Phasenverschiebungen, welche die beiden Atomgruppen jeweils erfahren, zu kontrollieren, wobei der für den zumindest einen internen Parameter angewandte Wert so ist, dass eine Differenz zwischen den Gesamtphasenverschiebungen, welche die beiden Atomgruppen (11, 12) jeweils erfahren, als Absolut- und Modulo-$\Pi$-Wert zwischen $\Pi/4$ und $3\Pi/4$ liegt;

/2/ für jedes bei der Messreihe für eine der Atomgruppen (11, 12) erhaltene Messergebnis ($P_{11}$, $P_{12}$) Bestimmen eines Ableitungswerts des Messergebnisses in Bezug auf den externen Parameter (a), wobei die Ableitung für das Messergebnis evaluiert wird;

/3/ Auswählen derjenigen der Atomgruppen (11, 12), für die der in Schritt /2/ Ableitungswert bestimmte Wert als Absolutwert der größte ist; und

/4/ Berechnen des Werts des externen Parameters (a) anhand des in Schritt /2/ erhaltenen Messergebnisses ($P_{11}$, $P_{12}$) für die in Schritt /3/ ausgewählte Atomgruppe.

2. Verfahren nach Anspruch 1, wobei der zumindest eine interne Parameter zumindest eine Amplitude eines zwischen zwei Laserstrahlimpulsen, die zum Ausbilden der Atominterferenz für eine der Atomgruppen (11, 12) genutzt werden, eingefügten Phasensprungs, zumindest eine Frequenzänderungsgeschwindigkeit einer Laserstrahlung, die zum Ausbilden der Atominterferenz für eine der Atomgruppen genutzt wird, oder eine Stärke und einen Gradienten eines Magnetfelds, das während der Ausbildung der Atominterferenzen an die Atomgruppen angelegt wird, oder eine Kombination mehrerer der zumindest einen Phasensprungamplitude, der zumindest einen Frequenzänderungsgeschwindigkeit der Laserstrahlung sowie der Intensität und des Gradienten des Magnetfelds umfasst.

3. Verfahren nach Anspruch 1 oder 2, wobei der für den zumindest einen internen Parameter angewandte Wert so ist, dass die Differenz zwischen den Gesamtphasenverschiebungen, welche die beiden Atomgruppen (11, 12) jeweils erfahren, als Absolut- und Modulo-$\Pi$-Wert zwischen $15\Pi/32$ und $17\Pi/32$ liegt, und wobei für diejenige der Atomgruppen (11, 12), die in Schritt /3/ ausgewählt wurde, die erste Funktion durch eine lineare Funktion der bei der Ausbildung der Atominterferenz für die ausgewählte Atomgruppe aufgetretenen Gesamtphasenverschiebung, in einem ganzen Intervall von Werten mit einer Intervalllänge von $3\Pi/8$ oder mehr, das die bei der Ausbildung der Atominterferenz aufgetretene Gesamtphasenverschiebung enthält, ersetzt wird.

4. Verfahren nach einem der vorangehenden Ansprüche, wobei die erste Funktion den Ausdruck $P = P_0 \cdot [1 - C \times \cos(\Delta\Phi_{tot})]$ für jede Atomgruppe (11, 12) besitzt, wobei P das Messergebnis bezeichnet, $\Delta\Phi_{tot}$ die bei der Ausbildung der Atominterferenz für die Atomgruppe aufgetretene Gesamtphasenverschiebung ist und $P_0$ und C zwei Zahlen ungleich null sind.

5. Verfahren nach einem der vorangehenden Ansprüche, wobei der zumindest eine interne Parameter eine Amplitude eines zwischen zwei Laserstrahlimpulsen, die zum Ausbilden der Atominterferenz für eine der Atomgruppen (11, 12) genutzt werden, eingefügten Phasensprungs umfasst und die konstante Phasenverschiebung, welche die Atomgruppe erfährt, einen zur Amplitude des Phasensprungs proportionalen Term umfasst.

6. Verfahren nach einem der vorangehenden Ansprüche, wobei der zumindest eine interne Parameter eine Frequenzänderungsgeschwindigkeit einer Laserstrahlung, die zum Ausbilden der Atominterferenz für eine der Atomgruppen (11, 12) genutzt wird, umfasst und die konstante Phasenverschiebung, welche die Atomgruppe erfährt, den Term $-2\Pi \times \alpha \times T^2$ umfasst, wobei T eine Basiszeit für eine Sequenz von Interaktionen zwischen den Atomen und Photonen, die zum Ausbilden der Atominterferenz der Atomgruppe eingesetzt wird, ist und $\alpha$ die Frequenzänderungsgeschwin-digkeit der Laserstrahlung ist.

7. Verfahren nach einem der vorangehenden Ansprüche, wobei der zumindest eine interne Parameter eine Stärke und einen Gradienten eines Magnetfelds, das während der Ausbildung der Atominterferenzen an die Atomgruppen (11, 12) angelegt wird, umfasst und die konstante Phasenverschiebung, die jede Atomgruppe erfährt, den Term $(A_{at}/M_{at}) \times B_0 \times B_1 \times \hbar \times k \times T^2$ umfasst, wobei $B_0$ und $B_1$ die Stärke bzw. der Gradient des Magnetfelds sind, T eine Basiszeit für eine Sequenz von Interaktionen zwischen den Atomen und Photonen, die zum Ausbilden der Atominterferenz für die Atomgruppe eingesetzt wird, ist, k ein Modul eines durch eines der Atome bei jeder Interaktion zwischen den Atomen und den Photonen empfangenen oder abgegebenen Impulses, geteilt durch $\hbar = h/(2\pi)$, ist, wobei h die Planck-Konstante ist, und $A_{at}/M_{at}$ ein von der Art der Atome abhängiger Koeffizient ist.

8. Gerät zur Messung mittels Atominterferometrie, umfassend:

- eine Atomquelle (100), die dazu angepasst ist, zumindest zwei Atomgruppen (11, 12) zu erzeugen, wobei die Atome jeder Atomgruppe von einer Art sind, die der Atomgruppe gewidmet ist und sich von der Art der Atome jeder anderen Atomgruppe unterscheidet;

- Mittel (101 - 103), die dazu angepasst sind, für jede Atomgruppe (11, 12) Atominterferenzbedingungen zu erzeugen, sodass die Bedingungen für jede Atomgruppe in einem ganzen Volumen, das der Atomgruppe zugeordnet ist und zumindest einen gemeinsamen Punkt mit dem jeder anderen Atomgruppe zugeordneten Volumen beinhaltet, erzeugt werden und zwischen einem Startzeitpunkt und einem Endzeitpunkt vor bzw. nach einem Zwischenzeitpunkt, der allen Atomgruppen gleich ist, erzeugt werden, um eine Messreihe zu bilden;

- eine Detektionsvorrichtung, die dazu eingerichtet ist, Messergebnisse ($P_{11}$, $P_{12}$) unabhängig und jeweils für alle Atomgruppen (11, 12) jeder Messreihe bereitzustellen und

- eine Analyseeinheit, die dazu angepasst ist, anhand jedes Messergebnisses ($P_{11}$, $P_{12}$) zumindest einen Wert eines externen Parameters (a) zu berechnen,

wobei jedes Messergebnis ($P_{11}$, $P_{12}$) in Abhängigkeit von einer ersten Funktion einer für die entsprechende Atomgruppe bei der Ausbildung der Atominterferenz aufgetretenen Gesamtphasenverschiebung variiert, wobei die Gesamtphasenverschiebung eine Summe einer zweiten Funktion des externen Parameters (a), dessen Wert gesucht wird, und einer konstanten Phasenverschiebung, welche die entsprechende Atomgruppe während der Ausbildung der Atominterferenz erfährt, umfasst,

wobei das Gerät **dadurch gekennzeichnet ist, dass** es dazu angepasst ist, bei jeder Messreihe einen Wert für zumindest einen operativen Parameter anzuwenden, der als interner Parameter bezeichnet wird und es erlaubt, eine Differenz zwischen den konstanten Phasenverschiebungen, welche die beiden Atomgruppen (11, 12) jeweils erfahren, zu kontrollieren, sodass eine Differenz zwischen den Gesamtphasenverschiebungen, welche die beiden Atomgruppen jeweils erfahren, als Absolut- und Modulo-$\Pi$-Wert zwischen $\Pi/4$ und $3\Pi/4$ liegt;

und wobei die Analyseeinheit dazu angepasst ist, die Schritte /2/ bis /4/ eines Verfahrens zur Messung mittels Atominterferometrie nach einem der Ansprüche 1 bis 8 auszuführen.

9. Gerät nach Anspruch 8 oder 9, wobei bei jeder Messreihe die Atominterferenzbedingungen für alle Atomgruppen (11, 12) unter Verwendung einer allen Atomgruppen gemeinsamen einzigen Laserquelleneinheit (102, 103) erzeugt werden.

10. Gerät nach Anspruch 8 oder 9, das ein Accelerometer, ein Gravimeter oder ein Gyrometer ausbildet.

**Claims**

1. Method of measurement by atomic interferometry, in which each session of measurements is executed with at least two sets of atoms (11, 12) each subjected to conditions of formation of atomic interference,

the atoms of each set of atoms (11, 12) being of a species dedicated to said set of atoms and different from the species of atoms of each other set of atoms,

method in which, for each session of measurements, said conditions are produced for each set of atoms (11, 12) throughout a volume that is associated with said set of atoms and that contains at least one point in common with the volume associated with each other set of atoms, and are produced between a start time point and an end time point respectively before and after an intermediate time point common to all the sets of atoms,

and in which a measurement result ($P_{11}$, $P_{12}$) is obtained in each session of measurements independently for each set of atoms (11, 12), each measurement result varying according to a first function of a total phase shift that appeared for the corresponding set of atoms during formation of the atomic interference, said total phase shift comprising a sum of a second function of an external parameter (a) a value of which is sought and of a constant phase shift that is undergone by the corresponding set of atoms during said formation of the atomic interference,

the method being **characterized in that** it comprises the following steps:

/1/ during a session of measurements, applying a value for at least one operating parameter, called internal parameter and making it possible to control a difference between the constant phase shifts to which the two sets of atoms are respectively subjected, the value applied for said at least one internal parameter being such that a difference between the total phase shifts that the two sets of atoms (11, 12) undergo, respectively, is between $\Pi/4$ and $3\Pi/4$, in absolute value and modulo $\Pi$;

/2/ for each measurement result ($P_{11}$, $P_{12}$) obtained for one of the sets of atoms (11, 12) in said session of measurements, determining a derivative value of said measurement result with respect to the external parameter (a), said derivative being evaluated for said measurement result;

/3/ selecting that one of the sets of atoms (11, 12) for which the derivative value determined in step /2/ is largest in absolute value; and

/4/ calculating the value of the external parameter (a) from the measurement result ($P_{11}$, $P_{12}$) obtained in step /2/ for the set of atoms selected in step /3/.

**2.** Method according to claim 1, in which said at least one internal parameter comprises at least one amplitude of a phase jump introduced between two pulses of laser radiation that are used to form the atomic interference for one of the sets of atoms (11, 12), at least one rate of variation of a frequency of laser radiation that is used to form the atomic interference for one of the sets of atoms, or an intensity and a gradient of a magnetic field that is applied to the sets of atoms during the formation of the atomic interferences, or a combination of several among said at least one amplitude of phase jump, said at least one rate of variation of frequency of laser radiation and said magnetic field intensity and gradient.

**3.** Method according to claim 1 or 2, in which the value applied for said at least one internal parameter is such that the difference between the total phase shifts that the two sets of atoms (11, 12) undergo, respectively, is between $15\Pi/32$ and $17\Pi/32$, in absolute value and modulo $\Pi$,
and in which, for that one of the sets of atoms (11, 12) that is selected in step /3/, the first function is replaced with an affine function of the total phase shift that appeared during the formation of the atomic interference for the selected set of atoms, in a whole interval of values having a length of interval greater than or equal to $3\Pi/8$, and which contains said total phase shift that appeared during the formation of the atomic interference.

**4.** Method according to any one of the preceding claims, in which the first function has the expression $P = P_0 \cdot [1 - C \times \cos(\Delta\Phi_{tot})]$ for each set of atoms (11, 12), where P denotes the measurement result, $\Delta\Phi_{tot}$ is the total phase shift that appeared during the formation of the atomic interference for said set of atoms, and $P_0$ and C are two non-zero numbers.

**5.** Method according to any one of the preceding claims, in which said at least one internal parameter comprises an amplitude of a phase jump introduced between two pulses of laser radiation that are used to form the atomic interference for one of the sets of atoms (11, 12), and the constant phase shift that is undergone by said set of atoms comprises a term proportional to the amplitude of the phase jump.

**6.** Method according to any one of the preceding claims, in which said at least one internal parameter comprises a rate of variation of frequency of laser radiation that is used to form the atomic interference for one of the sets of atoms (11, 12), and the constant phase shift that is undergone by said set of atoms comprises the term $-2\Pi \times \alpha \times T^2$, where T is a base time for a sequence of interactions between the atoms and photons that is implemented to form the atomic interference of said set of atoms, and $\alpha$ is the rate of variation of frequency of the laser radiation.

**7.** Method according to any one of the preceding claims, in which said at least one internal parameter comprises an intensity and a gradient of a magnetic field that is applied to the sets of atoms (11, 12) during the formation of the atomic interferences, and the constant phase shift that is undergone by each set of atoms comprises the term $(A_{at}/M_{at}) \times B_0 \times B_1 \times \hbar \times k \times T^2$, where $B_0$ and $B_1$ are the intensity and the gradient of the magnetic field respectively, T is a base time for a sequence of interactions between the atoms and photons that is implemented to form the atomic interference for said set of atoms, k is a modulus of a momentum received or transferred by one of the atoms during each interaction between the atoms and the photons, divided by $\hbar = h/(2\Pi)$ where h is Planck's constant, and $A_{at}/M_{at}$ is a coefficient that depends on the species of atoms.

**8.** Apparatus for measurement by atomic interferometry comprising:

- a source of atoms (100) suitable for producing at least two sets of atoms (11, 12), with the atoms of each set of atoms that are of a species dedicated to said set of atoms and different from the species of atoms of each other set of atoms;
- means (101-103) suitable for producing conditions of atomic interference for each set of atoms (11, 12), so that said conditions are produced for each set of atoms throughout a volume that is associated with said set of atoms and that contains at least one point in common with the volume associated with each other set of atoms, and produced between a start time point and an end time point respectively before and after an intermediate time point that is common to all the sets of atoms, so as to constitute a session of measurements;
- a detection device arranged for providing measurement results ($P_{11}$, $P_{12}$) respectively and independently for all the sets of atoms (11, 12) of each session of measurements; and
- an analysis unit suitable for calculating at least one value of an external parameter (a) from each measurement result ($P_{11}$, $P_{12}$),

in which each measurement result ($P_{11}$, $P_{12}$) varies according to a first function of a total phase shift that appeared for the corresponding set of atoms during the formation of the atomic interference, said total phase shift comprising a sum of a second function of the external parameter (a) the value of which is sought and of a constant phase shift that is undergone by the corresponding set of atoms during said formation of the atomic interference,

the apparatus being **characterized in that** it is suitable for applying, during each session of measurements, a value for at least one operating parameter, called an internal parameter and making it possible to control a difference between the constant phase shifts that the two sets of atoms (11, 12) undergo, respectively, so that a difference between the total phase shifts to which the two sets of atoms are subjected respectively, is between $\Pi/4$ and $3\Pi/4$, in absolute value and modulo $\Pi$;

and the analysis unit is suitable for executing steps /2/ to /4/ of a method of measurement by atomic interferometry according to any one of claims 1 to 8.

9. Apparatus according to claim 8, in which, for each session of measurements, the conditions of atomic interferences are produced for all the sets of atoms (11, 12) using a single laser source assembly (102, 103), common to said sets of atoms.

10. Apparatus according to claim 8 or 9, forming an accelerometer, a gravimeter or a gyrometer.

FIG. 1

PRODUCTION DES ATOMES FROIDS — 1

ENSEMBLE D'ATOMES 11      ENSEMBLE D'ATOMES 12

INTERFÉROMÉTRIE — $2_1$      INTERFÉROMÉTRIE — $2_2$

DÉTECTION — $3_1$      DÉTECTION — $3_2$

RÉSULTAT DE MESURE : $P_{11}$      RÉSULTAT DE MESURE : $P_{12}$

SÉLECTION DU RÉSULTAT
DE MESURE $P_{11}$ OU $P_{12}$
QUI PROCURE LA MEILLEURE PRÉCISION
POUR LE PARAMÈTRE EXTERNE a — 4

VALEUR POUR
LE PARAMÈTRE EXTERNE a — 5

FIG. 2

FIG. 3

FIG. 4a

FIG. 4b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D. SCHLIPPERT et al.** Quantum Test of the Universality of Free Fall. *Phys. Rev. Lett.,* 2014, vol. 112, 203002
- **A. BONNIN ; N. ZAHZAM ; Y. BIDEL ; A. BRESSON.** Simultaneous Dual-Species Matter-Wave Accelerometer. *Phys. Rev.,* 2013, vol. A 88, 043615
- **F. SORRENTINO et al.** Simultaneous measurement of gravity accélération and gravity gradient with an atom interferometer. *Appl. Phys. Lett.,* 2012, vol. 101, 114106
- **M. KASEVITCH et al.** Atomic interferometry using stimulated Raman transitions. *Phys. Rev. Lett.,* 1991, vol. 67, 181-184
- **Q. BODART et al.** A cold atom pyramidal gravimeter with a single laser beam. *Appl. Phys. Lett.,* 2010, vol. 96, 134101